# EUROPEAN PATENT SPECIFICATION

(11) **EP 3 861 632 B1**
(45) Date of publication and mention of the grant of the patent: **20.03.2024**
(21) Application number: 19794239.4
(22) Date of filing: 03.10.2019
(51) Int. Cl.: H02S 20/32

(54) **AN IMPROVED SOLAR POWER STATION**
VERBESSERTES SOLARKRAFTWERK
CENTRALE SOLAIRE AMÉLIORÉE

(30) Priority: 04.10.2018 GR 20180100445
(43) Date of publication of application: 11.08.2021
(73) Proprietor: GKAMANIS, Achilleas, 552 36 Panorama, Thessaloniki (GR); GKAMANIS, Georgios, 552 36 Thessaloniki (GR)
(72) Inventor: GKAMANIS, Achilleas, 552 36 Panorama, Thessaloniki (GR); GKAMANIS, Georgios, 552 36 Thessaloniki (GR)
(86) International application number: PCT/GR2019/000067
(87) International publication number: WO 2020/070527

(56) References cited:
- EP-B1- 1 925 891
- EP-B9- 1 925 891
- ES-U- 1 064 577
- US-A- 4 509 501
- US-A1- 2009 277 224

## Description

### Technical Field

The present disclosure relates to an improved solar power station having the features of the preamble of claim 1.

### Background Art

Solar power stations of this type are well known. They are used to increase the annual output e.g. by 30% with respect to solar stations in which the solar devices are immovable.

Document EP1925891B9 discloses a solar power station comprising: at least one solar device configured to generate power from solar energy; at least one space lattice configuration having framework members and node connectors; at least one foundation having a bearing plane. The solar device is connected to the space lattice configuration; the space lattice configuration is configured to rotate, with respect the foundation, about just one axis, which is perpendicular to the bearing plane; the foundation comprises a ring, the bearing plane comprising the top of the ring.

The framework members of the space lattice configuration of document EP1925891B9 are interconnected at their ends through the node connectors in a pattern that consists of at least one semi-octahedron, at least one tetrahedron, and at least one octahedron. The space lattice configuration further comprises: at least one cuboctahedron; at least one semi-cuboctahedron.

Notwithstanding the many advantages of a solar power station of this type, the need for further decreasing its construction cost as well as further increasing its annual output, thus making it more competitive, still exists.

Document WO2015155792A1 discloses a structure for supporting solar panels, which comprises a space frame structure and a foundation. The space frame structure is configured with interconnected framework members, which can carry predominantly axial forces. The foundation comprises at least two rings, and piles, wherein the rings are fixed to the piles. The rings are curved beams or rails. The foundation has a bearing plane, which comprises the top of said rings, and a central bearing or node. The space frame structure bears on the bearing plane and rotates, with respect to the foundation, about just one axis which is perpendicular to the bearing plane and passes through the central bearing or node.

Document WO2015095424A1 discloses a foldable system for cleaning a reflector dish of a dish-based solar power generation system. The primary structure of the reflector comprises a rim with a central hub, and at least one spoke radiating from the hub and being connected to the rim. Like a bicycle wheel, the connection of the spoke to the rim is made through adjustable tensioners.

Document US20140216440A1 discloses a tracker support system for solar collectors, which, in a particular embodiment, comprises a space frame structure, a triangular frame, and a foundation. The space frame structure is fixed to the triangular frame. The triangular frame is formed by three beams that are identical and connected in pairs. The foundation comprises a ring gear and piles, the ring gear being fixed to the piles, and the teeth of the ring gear being formed on the outer perimeter of the ring. Rolling members, in particular of the wheel type, are mounted at each corner of the triangular frame, wherein the rolling members bear on a horizontal roll band provided on the inner perimeter of the ring, such that the triangular frame rests on that circular roll band which is integrated into the ring and thus pivot around a vertical axis of rotation.

Document GR1008021 discloses a helical pile having a tapered lead part, a shaft, and a pile cap. The tapered lead part, which is configured to enter the ground when rotated, has a helical flat bar or plate welded on it.

The above mentioned helical pile is manufactured from a single piece of pipe having at least two symmetrical longitudinal slots at one of its end parts. The tapered lead part is formed by radial cold forging of the end part having the slots. According to this process, the end part having the slots is axially forced and rotated between two radially moving anvils or dies. The resulting tapered lead part is characterized by a cross section which comprises at least two Archimedean spirals, the cross sectional area of the tapered lead part being constant along its length and approximately equal to the cross sectional area of the shaft. This type of helical pile is suitable for both hard and soft soils, wherein for soft soils the width of the helical flat bar or plate is increased.

Document US4674244 discloses an improved roof construction for generating power from solar energy comprising a substantially flat, horizontal roof substrate and a plurality of parallel structures extending above the substrate. Each structure has two inclined surfaces **S** and **S1.** Solar devices are fixed to portion of surfaces **S;** and reflecting devices to portion of surfaces **S1,** wherein the reflecting devices are configured to reflect solar radiation the solar devices.

### Disclosure of Invention

The aims of the present invention were:
- to solve the problem of lack of structural integrity in solar power stations of prior art having the features the preamble of claim 1;
- to make possible the realization of large scale solar power stations having solar devices, large space lattice configurations, and foundations, wherein the space lattice configurations rotate with respect to the foundations, which are capable of resisting high wind actions, e.g. during a violent storm, and which require less amount of material per kW of installed moving solar devices;
- to provide a solar power station having space lattice configurations and foundations, which are susceptible to the so called open-ended type of industrialization that offers the economic advantage of an industrial mass production technique combined with a high degree of flexibility;
- to provide a solar power station with an environmental friendly or sustainable way of construction which reduces: energy consumption, amount of material, erection time, on site labour costs, and waste and dust on site.

These aims are achieved by an improved solar power station having the features of the characterizing part of claim 1. Additional advantages are achieved by the features of the dependent claims 2-10.

The improved solar power station according to the present invention comprises at least one space lattice configuration having framework members and node connectors, wherein the framework members are interconnected at their ends through the node connectors in a pattern that consists of at least one semi-cuboctahedron (½***CO***) and at least one semi-octahedron (½***O***).

As has been illustrated in document EP1925891B9, the semi-cuboctahedron (½***CO***) and the semi-octahedron (½***O***), which are configured with framework members and node connectors, are polyhedra whose configuration does not have structural integrity. Similarly, the space lattice configuration which consists of semi-cuboctahedrons (½***CO***) and semi-octahedrons (½***O***) in a face to face relationship does not have structural integrity.

Notwithstanding the advantage of relatively small number of framework members and node connectors of this space lattice configuration, as well as the convenience in incorporating solar devices within the space lattice, the problem of lack of structural integrity of this configuration still needs to be solved.

This is achieved by:
- the foundation which further comprises: a central hub, at least three pre-tensioned spokes, at least three piles, wherein: the hub is fixed to the spokes, the spokes are connected to the ring, the ring is fixed to the piles, and wherein said spokes are configured to restrain said hub with respect to said ring;
- the space lattice configuration which is rotatably mounted to said hub, in a manner that allows rotation, the axis of rotation passing through the centre of said hub;
- the at least one restraining device, which is configured to restrain said space lattice configuration with respect to said ring, wherein: the restraining device is fixed to said space lattice configuration, bears on the bearing plane, and is connected to said ring.

In this way certain degrees of freedom in the configuration are restrained and the space lattice acquires structural integrity and becomes a space lattice structure, capable of resisting high wind actions.

The at least three pre-tensioned spokes comprise pre-tensioning means so as to enable pre-tensioning. The pre-tensioning means further comprise radial distance regulating means.

The space lattice configuration further comprises an axle configured to rotate within the hub, the axle being fixed to the space lattice configuration. The provision of the axle allows for the even distribution of the horizontal wind actions to the piles, particularly when the space lattice configuration is rotatably released. In particular, this is achieved by the at least three pre-tensioned spokes which being under tension, and restraining the hub with respect to the ring, can transfer horizontal wind actions in all directions from the hub to the ring, and to the piles.

In a preferred embodiment, the above mentioned restraining device comprises a structural bearing configured to restrain the space lattice configuration with respect to the ring: a) in the tangential direction, b) in the radial direction, c) parallel to the axis of rotation.

In another embodiment, the restraining device is configured to rotatably release the space lattice configuration with respect to the ring, by removing the restraint in the tangential direction.

In still another embodiment, the restraining device is configured to restrain the space lattice configuration parallel to the axis of rotation, by removing the restraints both in the tangential and in the radial direction.

In the above embodiments, the restraining device preferably comprises a hydraulic structural bearing actuated by fluid pressure, the fluid flow being controlled remotely using solenoid valves.

In an improved embodiment, the ring comprises a curved beam. Also, the ring comprises an internal gear having a formed flat bar comprising the teeth of the internal gear, the formed flat bar being fixed to the ring. This improved embodiment further comprises a motor driven pinion configured to rotate the space lattice configuration when operated, the motor driven pinion being in mesh with the internal gear. Preferably, the motor driven pinion comprises a hydraulic motor driven pinion.

In another improved embodiment, the incorporation of reflecting devices, which are configured to reflect solar radiation to the solar devices, further increases the annual output of the solar power station according to the present invention, e.g. by at least another 30%, depending on the location of the solar power station and the technology of the reflecting devices, and thus making this improved solar power station quite competitive.

The adoption of the helical pile in the foundation provides an environmentally friendly way of construction, which assists in reducing erection time, on site labour costs, and waste and dust on site.

With the addition of the tetrahedron (***T***) the structural efficiency of the space lattice configuration is further improved, making possible the realization of reliable large scale solar power stations.

### Brief Description of Drawings

The invention will be further described, by way of example only, with reference to the accompanying drawings wherein like elements are numbered alike in the several figures:
Fig. 1 shows a diagrammatic three-dimensional view of an improved solar power station according to the present invention.
Fig. 2 shows a space lattice configuration of type ½***CO*** + ½***O***, which is part of the space lattice configuration of Fig. 1.
Fig. 3 shows a plan view of the foundation of Fig. 1.
Fig. 4 shows a sectional view of the foundation of Fig. 1.
Fig. 5 shows a sectional view of a spoke-to-ring and ring-to-pile connection detail of Fig. 1, and
a hydraulic motor driven pinion.
Fig. 6 shows a plan view detail of the internal gear of Fig. 5.
Fig. 7 shows the elevational view of a restraining device of Fig. 1, comprising a hydraulic structural bearing actuated by fluid pressure.
Fig. 8 shows a space lattice configuration of type ½***CO*** + ½***O*** + ***T**.*

### Best Mode(s) for Carrying Out the Invention

Hereinafter, the best mode contemplated for carrying out the present invention is described in detail.

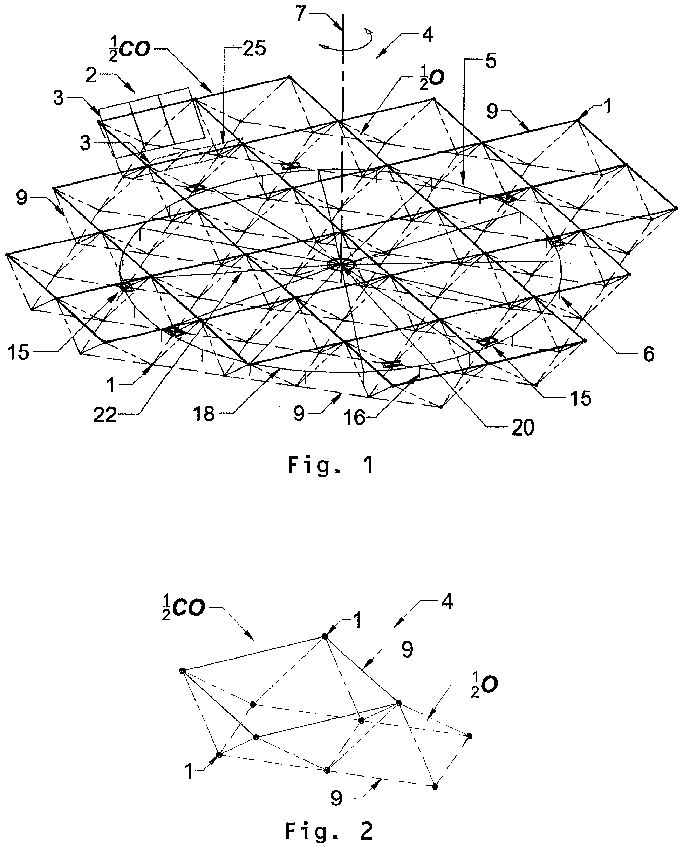

The improved solar power station of Fig. 1 comprises at least one solar device **2** configured to generate power from solar energy, at least one space lattice configuration **4,** and at least foundation **6** having a bearing plane **5.** The solar device **2** is firmly or rotationally connected to the space lattice configuration **4** through a structure **3** on which the solar device **2** is fixed. The space lattice configuration **4** has framework members **9** and node connectors **1,** wherein the framework members **9** are interconnected at their ends through the node connectors **1,** e.g. according to document GR1004187, in a pattern that consists of at least one semi-cuboctahedron ½***CO*** and at least one semi-octahedron ½***O***.

Fig. 2 shows a semi-cuboctahedron ½***CO*** and a semi-octahedron ½***O*** assembled together in a face to face relationship, thus forming a space lattice configuration **4** of type ½***CO*** + ½***O***. In this configuration the framework members **9** are the edges, and the node connectors **1** are the vertexes of the polyhedrons. The faces of the polyhedrons which are configured in this manner are left to be imagined. The semi-cuboctahedron ½***CO*** of Fig. 2 has two parallel unequal square faces connected by eight isosceles triangular faces, so that there are three triangular and one square face at each vertex, the framework members of the larger square face having a length equal to the length of the framework members of the smaller square face multiplied by square root of two. The height of such a semi-cuboctahedron ½***CO*** can always be adjusted so that the four triangular faces which have a common framework member with the smaller square face become equilateral, the four triangular faces which have a common framework member with the larger square face becoming right-angled isosceles. The semi-octahedron ½***O*** of Fig. 2 is a right regular pyramid having one square face, and four isosceles triangular faces. The height of such a semi-octahedron ½***O*** can also be adjusted so that the four isosceles triangular faces become equilateral, the square face of the semi-octahedron ½***O*** having a common framework member with the smaller square face of the semi-cuboctahedron ½***CO***. The space lattice configuration of Fig. 2 is part of space lattice configuration **4** of Fig. 1.

Referring again to Fig. 1, the space lattice configuration **4** is configured to rotate with respect to the foundation **6** about just one axis **7** which is perpendicular to the bearing plane **5.**

The foundation **6** comprises a ring **18,** wherein the bearing plane **5** comprises the top of the ring **18.**

The foundation **6** of the improved solar power station of Fig. 1 further comprises: a central hub **20,** at least three pre-tensioned spokes **22** radiating from the central hub **20,** and at least three piles **16,** wherein: the hub **20** is fixed to the spokes **22,** the spokes **22** are connected to the ring **18,** the ring **18** is fixed to the piles **16.**

The at least three pre-tensioned spokes **22** are configured to restrain said hub **20** with respect to said ring **18,** wherein the pre-tensioned spokes **22** comprise pre-tensioning means **14.**

The space lattice configuration **4** is rotatably mounted to said hub **20,** in a manner that allows rotation about the just one axis of rotation **7,** wherein the just one axis of rotation **7** passes through the centre of said hub **20.**

The improved solar power station of Fig. 1 further comprises at least one restraining device **15** which is configured to restrain said space lattice configuration **4** with respect to said ring **18,** wherein the restraining device **15** is fixed to said space lattice configuration **4,** bears on the bearing plane **5,** and is connected to said ring **18.**

The space lattice configuration **4** of the improved solar power station of Fig. 1 further comprises an axle **24** which is configured to rotate within the hub **20,** the axle **24** being fixed to the space lattice configuration **4** through interconnecting framework members **23.**

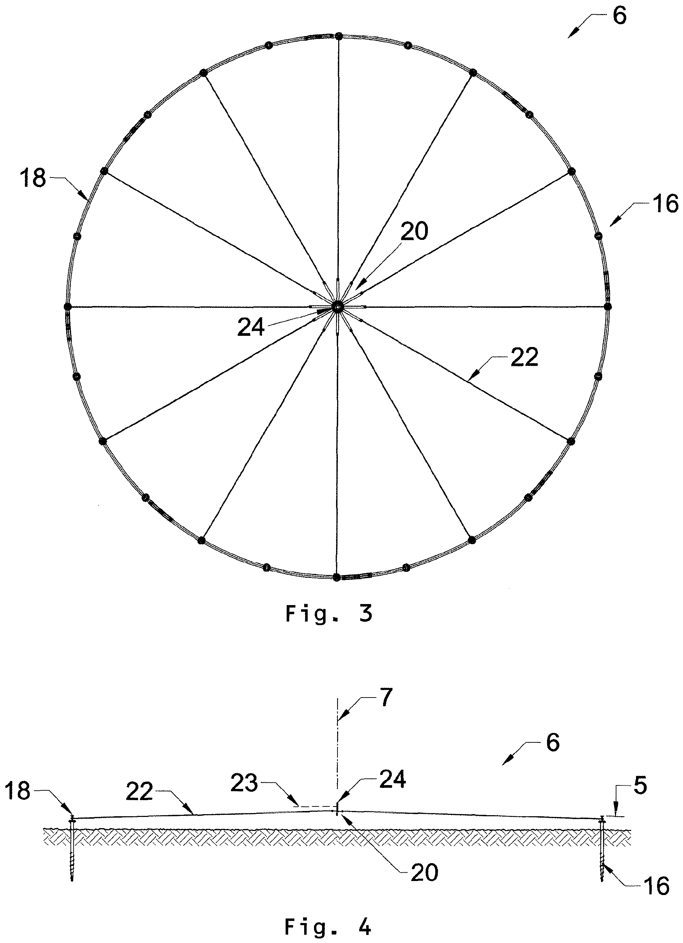

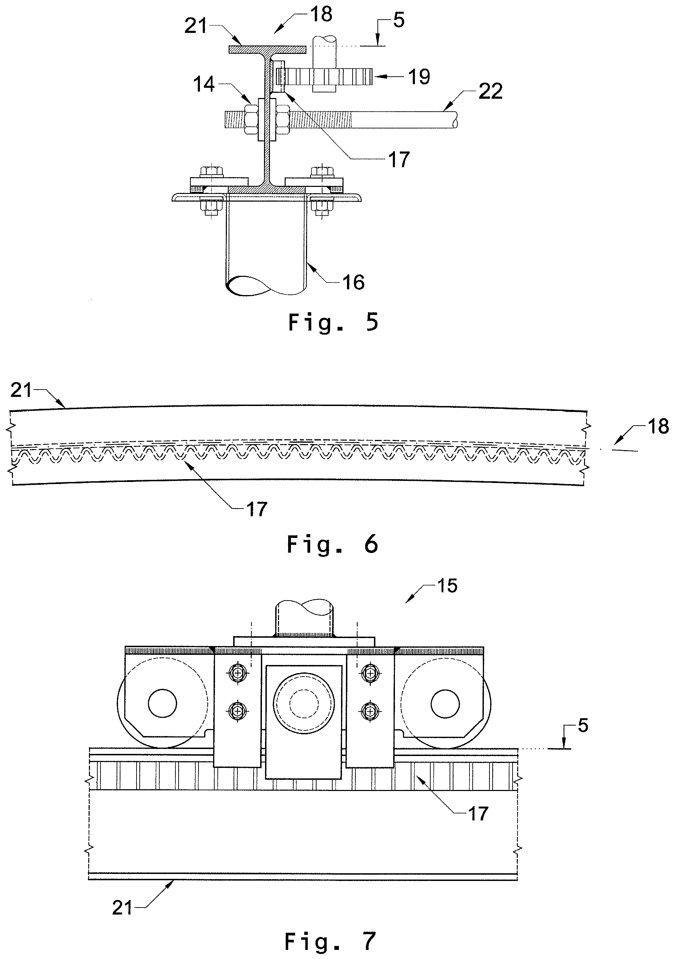

Figs. 3-6 show an embodiment of the foundation **6,** and Fig. 7 an embodiment of the restraining device **15** of the improved solar power station of Fig. 1.

In a preferred embodiment, the above mentioned restraining device **15** comprises a structural bearing **15** configured to restrain the space lattice configuration **4** with respect to the ring **18:** a) in the tangential direction, b) in the radial direction, c) parallel to the axis of rotation **7.**

In another preferred embodiment, the restraining device **15** comprises a structural bearing **15** configured to rotatably release the space lattice configuration **4** with respect to the ring **18,** by removing the restraint in the tangential direction.

In the above embodiments, the restraining device **15** preferably comprises a hydraulic structural bearing **15** which is actuated by fluid pressure. The fluid flow to the restraining devices **15** of this type is controlled remotely through a central controlling unit using solenoid valves.

In an improved embodiment, the ring **18** comprises curved beam **21.** In addition, the ring **18** further comprises an internal gear **18,** having a formed flat bar **17** comprising the teeth of the internal gear **18,** the formed flat bar **17** being fixed on the inner side of the ring **18.** The resulting internal gear **18** has a reduced manufacturing cost. In this embodiment the improved solar power station of Fig. 1 further comprises a motor driven pinion **19** configured to rotate said space lattice configuration **4** about said axis **7** when operated, wherein the motor driven pinion **19** is in mesh with the internal gear **18.** Preferably, the motor driven pinion **19** comprises a hydraulic motor driven pinion **19.**

The above mentioned pre-tensioning means **14** further comprise radial distance regulating means **14,** which assist in minimizing the deviations from the pure cyclic geometry in the above mentioned internal gear **18,** thus allowing for the smooth operation of the motor driven pinion **19.**

In another improved embodiment, the improved solar power station of Fig. 1 further comprises at least one reflecting device **25** which is configured to reflect solar radiation to said at least one solar device **2.** The reflecting device **25** is either firmly or rotationally connected to the space lattice configuration **4** through a structure **3** on which the reflecting device **25** is fixed.

The at least three piles **16** of the foundation **6** of the improved solar power station of Fig. 1, further comprise helical piles **16,** e.g. according to document GR1008021, thus providing an environmental friendly way of construction for the foundation **6.**

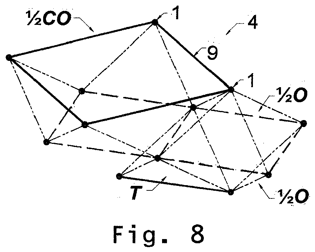

Fig. 8 shows a space lattice configuration **4** which consists of one semi-cuboctahedron ½***CO***, two semi-octahedrons ½***O***, and one tetrahedron **T,** in a face to face relationship. The first semi-octahedron ½***O*** has a common triangular face with the semi-cuboctahedron ½***CO***, the second semi-octahedron ½***O*** has a common square face with the first semi-octahedron ½***O***, and the tetrahedron **T** has a common triangular face with the second semi-octahedron ½***O***. In this embodiment the common triangular faces are equal isosceles, the tetrahedron **T** having four equal isosceles triangular faces. The height of the semi-octahedrons ½***O*** can be adjusted so that the common equal isosceles triangular faces become equilateral, and then the tetrahedron **T** becomes a regular tetrahedron having four equilateral triangular faces.

Although the invention has been explained in relation to its preferred embodiment(s) as mentioned above, it is to be understood that many other possible modifications and variations can be made without departing from the scope of the present invention. It is, therefore, contemplated that the appended claim or claims will cover such modifications and variations that fall within the true scope of the invention.

## Claims

1. An improved solar power station comprising:
- at least one solar device (2) configured to generate power from solar energy;
- at least one space lattice configuration (4) having framework members (9) interconnected at their ends in a pattern that consists of at least one semi-cuboctahedron (½***CO***) and at least one semi-octahedron (½***O***);
- at least one foundation (6) having a bearing plane (5); wherein:
- said solar device (2) is connected to said space lattice configuration (4);
- said space lattice configuration (4) is configured to rotate, with respect to said foundation (6), about just one axis (7) which is perpendicular to said bearing plane (5);
- said foundation (6) comprises a ring (18), said bearing plane (5) comprising the top of said ring (18);
**characterized in that:**
- said foundation (6) further comprises a central hub (20), at least three pre-tensioned spokes (22) radiating from said hub (20), at least three helical piles (16), wherein said hub (20) is fixed to said spokes (22), said spokes (22) are connected to said ring (18), said ring (18) is fixed to said piles (16), and wherein said spokes (22) are configured to restrain said hub (20) with respect to said ring (18), said spokes (22) comprising pre-tensioning means (14) so as to enable pre-tensioning, said pre-tensioning means (14) further comprising radial distance regulating means (14);
- said space lattice configuration (4) is rotatably mounted to said hub (20) in a manner that allows rotation with respect to said foundation (6), said axis (7) passing through the centre of said hub (20);
- said solar power station further comprises at least one restraining device (15), wherein said restraining device (15) comprises a structural bearing (15) configured to restrain said space lattice configuration (4) with respect to said ring (18) when actuated, in a manner that said space lattice configuration (4) acquires structural integrity and becomes a space lattice structure (4), and wherein said restraining device (15) is fixed to said space lattice configuration (4), bears on said bearing plane (5), and is connected to said ring (18).

2. The improved solar power station of claim 1, wherein said restraining device (15) comprises a hydraulic structural bearing (15) actuated by fluid pressure, the fluid flow to said restraining device (15) being controlled remotely through a central controlling unit using solenoid valves.

3. The improved solar power station of claim 1, wherein said restraining device (15) is configured to rotatably release said space lattice configuration (4) by removing the restraint in the tangential direction with respect to said ring (18).

4. The improved solar power station of claim 1, wherein said space lattice configuration (4) further comprises an axle (24), said axle (24) being configured to rotate within said hub (20).

5. The improved solar power station of claim 1, wherein said ring (18) comprises a curved beam (21).

6. The improved solar power station of claim 1, wherein said ring (18) comprises an internal gear (18), said ring (18) having a formed flat bar (17) comprising the teeth of said internal gear (18).

7. The improved solar power station of claim 6 further comprising a motor driven pinion (19) configured to rotate said space lattice configuration (4) about said axis (7) when operated, said motor driven pinion (19) being in mesh with said internal gear (18).

8. The improved solar power station of claim 7, wherein said motor driven pinion (19) comprises a hydraulic motor driven pinion (19).

9. The improved solar power station of claim 1 further comprising at least one reflecting device (25) configured to reflect solar radiation to said solar device (2).

10. The improved solar power station of claim 1, wherein said space lattice configuration (4) further comprises at least one tetrahedron (***T***).

## Patentansprüche

1. Verbessertes Solarkraftwerk, umfassend:
- mindestens eine Solarvorrichtung (2), die zur Erzeugung von Energie aus Sonnenenergie konfiguriert ist;
- mindestens eine räumliche Raumgitterkonfiguration (4) mit Rahmenelementen (9), die an ihren Enden in einem Muster miteinander verbunden sind, das aus mindestens einem Halbkuboktaeder (½***CO***) und mindestens einem Halboktaeder (½***O***) besteht;
- mindestens ein Fundament (6) mit einer Lagerebene (5); wobei:
- die Solarvorrichtung (2) mit der Raumgitterkonfiguration (4) verbunden ist;
- die Raumgitterkonfiguration (4) so konfiguriert ist, um sich in Bezug auf das Fundament (6) um nur eine Achse (7) zu drehen, die senkrecht zu der Lagerebene (5) ist;
- das Fundament (6) einen Ring (18) umfasst, wobei die Lagerebene (5) den oberen Teil des Rings (18) umfasst;
**dadurch gekennzeichnet, dass:**
- das Fundament (6) weiterhin eine zentrale Nabe (20), mindestens drei vorgespannte Speichen (22), die sich strahlenförmig von der Nabe (20) erstrecken, mindestens drei spiralförmige Pfähle (16) umfasst, wobei die Nabe (20) an den Speichen (22) befestigt ist, wobei die Speichen (22) mit dem Ring (18) verbunden sind, der Ring (18) an den Pfosten (16) befestigt ist, und wobei die Speichen (22) konfiguriert sind, um die Nabe (20) in Bezug auf den Ring (18) zu halten, wobei die Speichen (22) Vorspannmittel (14) aufweisen, um eine Vorspannung zu ermöglichen, wobei die Vorspannmittel (14) ferner radiale Abstandsreguliermittel (14) umfassen;
- die Raumgitterkonfiguration (4) so drehbar an der Nabe (20) montiert ist, um eine Drehung in Bezug auf das Fundament (6) zu ermöglichen, wobei die Achse (7) durch die Mitte der Nabe (20) verläuft;
- das Solarkraftwerk weiterhin mindestens eine Rückhaltevorrichtung (15) umfasst, wobei die Rückhaltevorrichtung (15) ein strukturelles Lager (15) umfasst, das so konfiguriert ist, die Raumgitterkonfiguration (4) in Bezug auf den Ring (18) zu halten, wenn das strukturelle Lager (15) betätigt wird, so dass die Raumgitterkonfiguration (4) strukturelle Integrität erhält und zu einer Raumgitterstruktur (4) wird, und wobei die Rückhaltevorrichtung (15) an der Raumgitterkonfiguration (4) befestigt ist, auf der Lagerebene (5) aufliegt, und mit dem Ring (18) verbunden ist.

2. Verbessertes Solarkraftwerk nach Anspruch 1, wobei die Rückhaltevorrichtung (15) ein hydraulisches strukturelles Lager (15) umfasst, das durch Fluiddruck betätigt wird, wobei der Fluidstrom zu der Rückhaltevorrichtung (15) durch eine zentrale Steuereinheit unter Verwendung von Magnetventilen ferngesteuert wird.

3. Verbessertes Solarkraftwerk nach Anspruch 1, wobei die Rückhaltevorrichtung (15) so konfiguriert ist, dass sie die Raumgitterkonfiguration (4) durch Lösen der Rückhaltung in tangentialer Richtung in Bezug auf den Ring (18) drehbar freigibt.

4. Verbessertes Solarkraftwerk nach Anspruch 1, wobei die Raumgitterkonfiguration (4) weiterhin eine Welle (24) umfasst, wobei die Welle (24) so konfiguriert ist, dass sie sich innerhalb der Nabe (20) dreht.

5. Verbessertes Solarkraftwerk nach Anspruch 1, wobei der Ring (18) einen gekrümmten Träger (21) umfasst.

6. Verbessertes Solarkraftwerk nach Anspruch 1, wobei der Ring (18) ein Innenzahnrad (18) umfasst, wobei der Ring (18) einen geformten Flachstab (17) aufweist, der die Zähne des Innenzahnrads (18) umfasst.

7. Verbessertes Solarkraftwerk nach Anspruch 6, weiterhin ein motorgetriebenes Ritzel (19) umfassend, das so konfiguriert ist, um die Raumgitterkonfiguration (4) um die Achse (7) zu drehen, wenn es betrieben wird, wobei das motorgetriebene Ritzel (19) mit dem Innenzahnrad (18) in Eingriff steht.

8. Verbessertes Solarkraftwerk nach Anspruch 7, wobei das motorgetriebene Ritzel (19) ein hydraulisch motorgetriebenes Ritzel (19) umfasst.

9. Verbessertes Solarkraftwerk nach Anspruch 1, weiterhin mindestens eine Reflexionsvorrichtung (25) umfassend, die konfiguriert ist, um Sonnenstrahlung zu der Solarvorrichtung (2) zu reflektieren.

10. Verbessertes Solarkraftwerk nach Anspruch 1, wobei die Raumgitterkonfiguration (4) weiterhin mindestens ein Tetraeder (***T***) umfasst.

## Revendications

1. Centrale solaire améliorée comprenant:
- au moins un dispositif solaire (2) configuré pour produire de l'énergie à partir de l'énergie solaire;
- au moins une configuration de treillis spatial (4) ayant des éléments de charpente (9) interconnectés à leurs extrémités selon un motif qui consiste en au moins un semi-cuboctaèdre (½***CO***) et au moins un semi-octaèdre (½***O***);
- au moins une fondation (6) ayant un plan d'appui (5); dans laquelle:
- ledit dispositif solaire (2) est connecté à ladite configuration de treillis spatial (4);
- ladite configuration de treillis spatial (4) est configurée pour tourner, par rapport à ladite fondation (6), autour d'un seul axe (7) qui est perpendiculaire audit plan d'appui (5);
- ladite fondation (6) comprend un anneau (18), ledit plan d'appui (5) comprenant le sommet dudit anneau (18) ;
**caractérisée en ce que:**
- ladite fondation (6) comprend en outre un moyeu central (20), au moins trois rayons prétendus (22) rayonnant à partir dudit moyeu (20), au moins trois pieux hélicoïdaux (16), dans laquelle ledit moyeu (20) est fixé auxdits rayons (22), lesdits rayons (22) sont connectés à ledit anneau (18), ledit anneau (18) est fixé auxdits pieux (16), et dans laquelle lesdits rayons (22) sont configurés pour retenir ledit moyeu (20) par rapport audit anneau (18), lesdits rayons (22) comprenant des moyens de pré-tension (14) afin de permettre la pré-tension, lesdits moyens de pré-tension (14) comprenant en outre des moyens de régulation de la distance radiale (14);
- ladite configuration de treillis spatial (4) est montée rotative sur ledit moyeu (20) de manière à permettre la rotation par rapport à ladite fondation (6), ledit axe (7) passant par le centre dudit moyeu (20);
- ladite centrale solaire comprend en outre au moins un dispositif de retenue (15), dans laquelle ledit dispositif de retenue (15) comprend un appui structurel (15) configuré pour retenir ladite configuration de treillis spatial(4) par rapport audit anneau (18) lorsqu'il est actionné, de manière à ce que ladite configuration de treillis spatial (4) acquière une intégrité structurelle et devienne une structure de treillis spatial (4), et dans laquelle ledit dispositif de retenue (15) est fixé à ladite configuration de treillis spatial(4), s'appuie sur ledit plan d'appui (5), et est connecté audit anneau (18).

2. La centrale solaire améliorée de la revendication 1, dans laquelle ledit dispositif de retenue (15) comprend un appui structurel hydraulique (15) actionné par la pression du fluide, l'écoulement du fluide vers ledit dispositif de retenue (15) étant contrôlé à distance par une unité de commande centrale à l'aide d'électrovannes.

3. La centrale solaire améliorée de la revendication 1, dans laquelle ledit dispositif de retenue (15) est configuré pour libérer de manière rotative ladite configuration de treillis spatial (4) en supprimant la retenue dans la direction tangentielle par rapport à ledit anneau (18).

4. La centrale solaire améliorée de la revendication 1, dans laquelle ladite configuration de treillis spatial (4) comprend en outre un arbre (24), ledit arbre (24) étant configuré pour tourner dans ledit moyeu (20).

5. La centrale solaire améliorée de la revendication 1, dans laquelle ledit anneau (18) comprend une poutre incurvée (21) .

6. La centrale solaire améliorée de la revendication 1, dans laquelle ledit anneau (18) comprend un engrenage interne (18), ledit anneau (18) ayant une barre plate formée (17) comprenant les dents dudit engrenage interne (18).

7. La centrale solaire améliorée de la revendication 6 comprenant en outre un pignon entraîné par moteur (19) configuré pour faire tourner ladite configuration de treillis spatial (4) autour dudit axe (7) lorsqu'il est actionné, ledit pignon entraîné par moteur (19) étant en prise avec ledit engrenage interne (18).

8. La centrale solaire améliorée de la revendication 7, dans laquelle ledit pignon motorisé (19) comprend un pignon entraîné par moteur hydraulique (19).

9. La centrale solaire améliorée de la revendication 1 comprenant en outre au moins un dispositif réfléchissant (25) configuré pour réfléchir le rayonnement solaire vers ledit dispositif solaire (2).

10. La centrale solaire améliorée de la revendication 1, dans laquelle ladite configuration de treillis spatial (4) comprend en outre au moins un tétraèdre (T).
